# EUROPEAN PATENT SPECIFICATION

(11) **EP 1 375 256 B1**
(45) Date of publication and mention of the grant of the patent: **13.08.2008**
(21) Application number: 02028907.0
(22) Date of filing: 23.12.2002
(51) Int. Cl.: B60R 13/06

(54) **Joint for roof antenna with anti-withdrawal device of the rod**
Dachantennenverbindung mit Abziehsperrvorrichtung für den Stab
Fixation pour antenne de toit avec dispositif anti-retrait pour la tige

(30) Priority: 21.06.2002 IT RE20020016 U
(43) Date of publication of application: 02.01.2004
(73) Proprietor: Ask Industries S.p.A., 42100 Reggio Emilia (IT)
(72) Inventor: Cavalli, Claudio, 42020 Montecavolo (Reggio Emilia) (IT)
(74) Representative: Lecce, Giovanni

(56) References cited:
- EP-A- 0 443 172
- EP-A- 0 891 001
- WO-A-00/10221

## Description

The present invention refers to a joint for a roof antenna with anti-withdrawal device of the rod. More particularly, the present invention refers to a joint for a roof antenna with anti-withdrawal device of the rod suitable to be installed on vehicles.

It is known that in many types of antennas that can be installed on the vehicle roofs, the rod can be unscrewed and removed to avoid damaging during the in-line assembly, transportations and automatic washings with roller brushes.

It is also known that this withdrawal possibility as well as facilitating these operations as the absence of the rods also avoids the possibility of striking against the roofs and of damages to the varnishing, it can also facilitates thefts and vandalistic acts.

EP 0 891 001 shows such an antenna

Some kinds of more recent rod antennas have been equipped with base means that allow their lowering at the roof level thus avoiding their complete withdrawal. Even though these solutions reduce or avoid theft and/or the attempts of vandalistic acts, are not conceived to be properly fastened in the lowered position in order to place the rods in such a positions to avoid said striking against the body of the vehicle.

Object of the present invention is to remove the above-mentioned drawbacks. The invention as it is, characterized by the claims, solves the problem by a joint for roof rod antenna with anti-withdrawal device of the same rod, by which the following results are obtained: the lower end of the rod of the antenna comprises a male thread which can be coupled to two threaded holes obtained on the support base: one directed for the reception orientation of the antenna and the other one for the constrained orientation of the rod in at least one parallel or even more inclined position with respect to the roof of the vehicle on which the antenna is installed. The anti-withdrawal device of the rod is constituted by a snap ring placed on the tang hold of the lower end of the rod that, in a first assembly, engages against a fixed counterboring and places itself in such a way to avoid each subsequent withdrawal attempt and return of the same rod; said counterboring is obtained in the upper part of a diametral passage comprised on a semi-rotating cylindrical drum wherein the lower threaded end passes through and around which the same end can partially rotate for alignment with respect to said threaded holes of the base.

The advantages obtained by the present invention essentially consist in the fact that after the first installation, the rod of the antenna cannot be withdrawn any more from its support base, but it can take a first fixed position which is oriented into the direction of the antenna reception and a second fixed position which is parallel or even more inclined towards the roof of the vehicles and keeps the rod steady during the in-line assembly at the manufacturers' plants, during the transportation of vehicles by two tier car carriers and/or trains and during the automatic washing operations with roller brushes.

The invention is hereby described in detail according to its embodiment which is exclusively given by way of non-limitative example with reference to the enclosed drawings wherein:

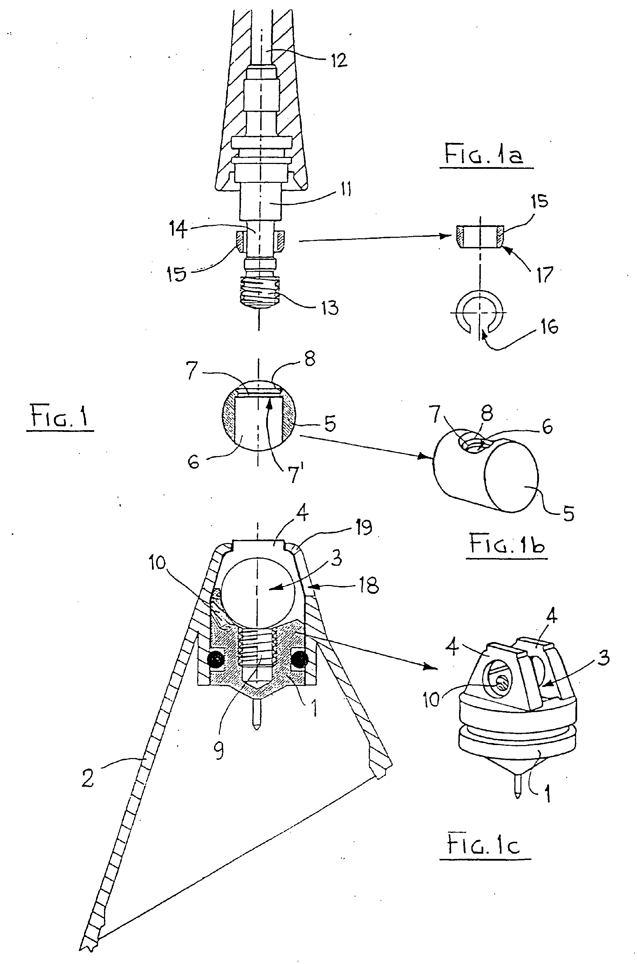

Figures 1, la, 1b and 1c show: an exploded longitudinal section view of the joint according to the present invention, the detail of the snap ring placed on a tang hold of the lower end of the rod, the schematic perspective view of the semi-rotating cylindrical drum, the perspective schematic view of the fastening base of the rod of an antenna;

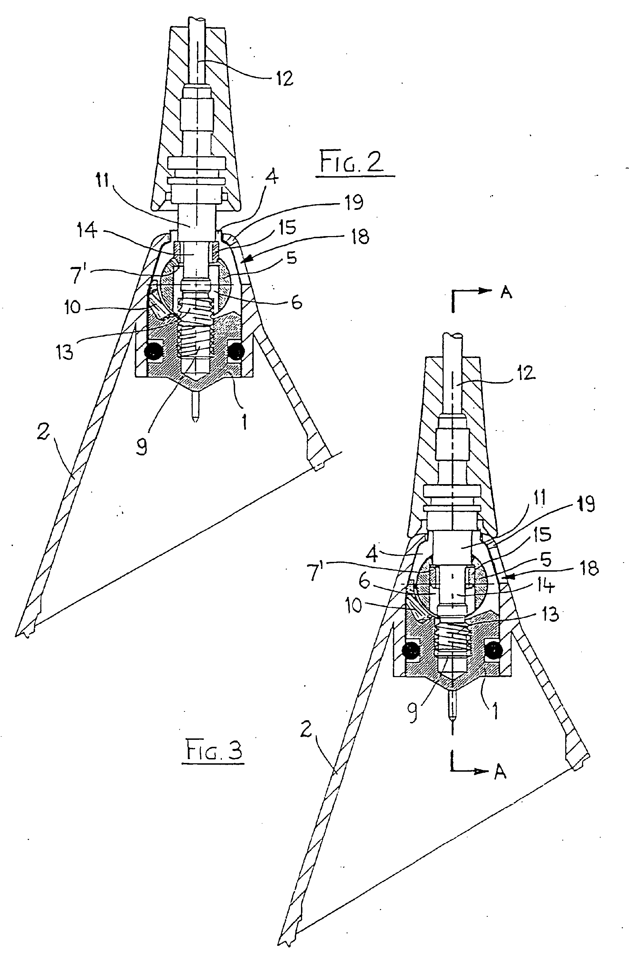

Figure 2 shows a longitudinal section of the joint during the first installation with the threaded lower end of the rod during the coupling phase with the first threaded hole of the support base oriented for the reception of the antenna;
Figure 3 shows the longitudinal section of the assembled joint with the rod aligned for the reception of the antenna and the snap ring counterboring with the upper part of the diametral passage comprised on the semi-rotating cylindrical drum,

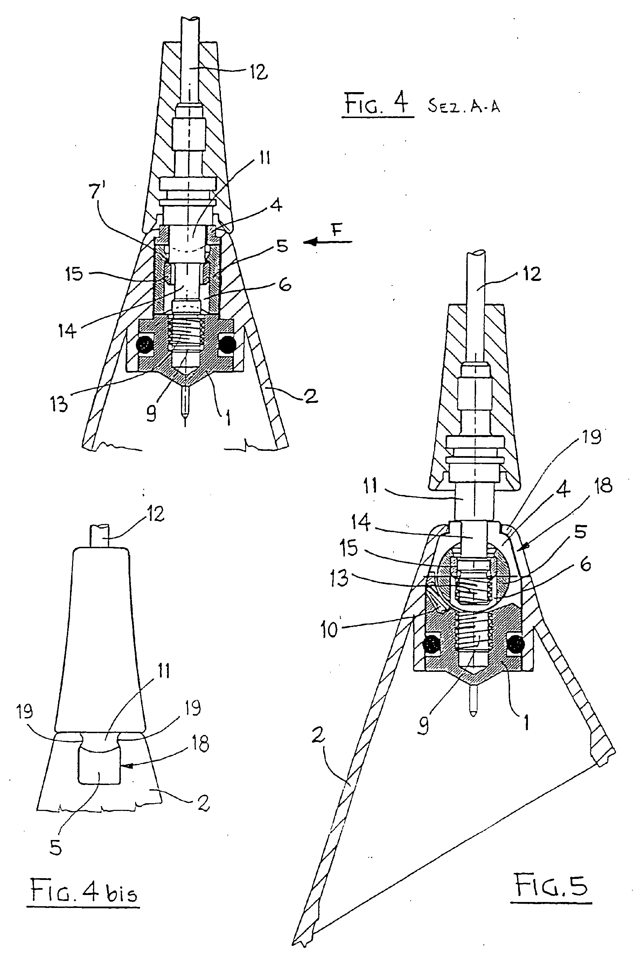

Figures 4 and 4 bis show the section of the installed joint with the rod aligned for the reception of the antenna and the counterboring snap ring transversally obtained according to the line A-A of the Figure 3 and the joint installed in the same way as in Figure 4 in a side view according to the arrow F,
Figure 5 shows the longitudinal section of the joint with the rod uncoupled from the first threaded hole but with the counterboring snap ring avoiding its withdrawal,

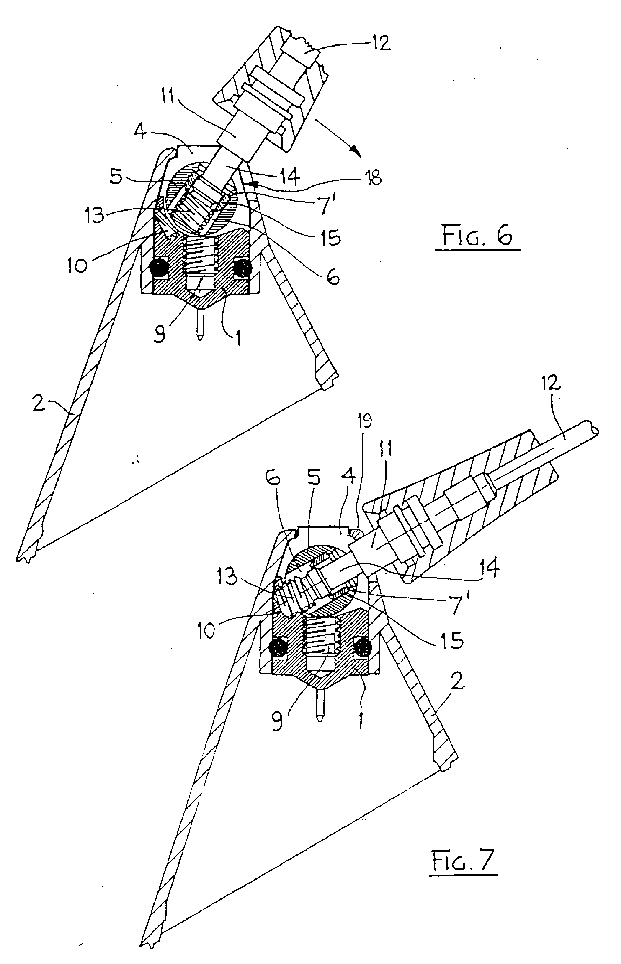

Figure 6 shows the longitudinal section of the joint with the rod uncoupled from the first threaded hole that cannot be withdrawn, but it can be inclined with a rotation of the semi-rotating cylindrical drum and,
Figure 7 shows the longitudinal section of the joint with its lower threaded end aligned, screwed and fastened to the second threaded hole of the support base and the inclined orientation of the antenna towards the roof of the vehicles.

With reference to the Figures, it can be noticed that the fastening base 1 of a support 2 for a rod antenna comprises a circular seat 3 with side saddles 4 wherein a cylindrical drum 5 which can rotate inside the same saddles is housed and a diametral central space 6 is obtained with a narrowed access hole 7 forming an upper counterboring 7' with a conical raiser 8. On the circular seat 3 two threaded holes 9 and 10 are obtained, one of which is directed for the constrained reception orientation of the antenna and the other one for the constrained orientation of the rod in a parallel or even more inclined way with respect to the roof of the vehicle on which the antenna is installed. The base 11 of the rod 12 comprises a lower threaded end 13 and an upper tang hold 14 on which a snap ring 15 with longitudinal notch 16 and lower conical raiser 17 is placed. During the first installation, the lower threaded end 13 of the rod 12 passes through the diametral central seat 6 of the cylindrical drum 5 and it is then coupled and screwed into the threaded hole 9 obtained in the base 1 and oriented in the direction of the proper reception of the antenna together with the support 2.

With the screwing, the snap ring 15 is pushed from the base 11 against the conical raiser 8 and it is forced to narrow in order to pass through the narrowed access hole 7, to open again under the counterboring 7' of the diametral central space 6 of the cylindrical drum 5 and stay inside the same space without return. The narrowing of the ring 15 is allowed by the presence of the longitudinal notch 16 and by the lower conical raiser 17 together with inherent elasticity of the material used for its manufacturing. In this condition the snap ring 15 takes a narrowed position which is sufficient to allow the sliding of the tang hold 14 and it constitutes a counterboring against which the threading 13, even though unscrewed, collides without any possibility to pass through in such a way that the rod 12 cannot be withdrawn from the base 1.

When the antenna must be bended towards the roof of the vehicles to submit them to the subsequent in-line assembly steps at manufacturers' plants, to the transportation by two tier car carriers or trains, to the automatic washing with roller brushes, the threaded end 13 can be unscrewed from the threaded hole 9 of the base 1 until the same end is completely withdrawn inside the space 6 which is not occupied by the snap ring 15; in this position the rod 12 can be then rotated along the circular seat 3, due to the fact that even the cylindrical drum 5 rotates supported by the circular side saddles 4. This rotation can be carried out also because the support 2 comprises a lateral slit 18 aligned to the access hole 7 of the cylindrical drum 5 allowing the passage of the base 11 of the rod. Once the alignment of the rod 12 with the second threaded hole 10 is reached, the lower threaded end 13 can be screwed again and the rod takes the second fixed inclined position towards the roof of the vehicles keeping it steady during said manufacturing, transportation and washing steps.

The lateral slit 18 of the support 2, for the passage and the inclined positioning of the base 11 of the antenna can be carried out with opposite side notches 19 whose distance among them is lower than the diameter of the same base. According to the elasticity of the plastic material with which the support 2 is made of, during the rotation and the passage of the base 11, the notches 19 are forced to elastically wide in order to narrow immediately afterwards thus imposing to the antenna the exact alignment with the threaded hole 10 to give it a further stability.

## Claims

1. A joint for a roof antenna with anti-withdrawal device of the rod **characterized by** the fact that it is constituted by a snap ring (15) that engages against a counterboring (7) obtained in the diametral central space (6) of a cylindrical drum (5) placed in a circular seat (3) on the fastening base (1) of the same joint, constitutes itself a counterboring against which the threaded lower end (13) of the base (11) of the rod (12) of an antenna engages without possibility of withdrawal and passes through the same diametral central seat (6); this threaded end (13) which is engaged without possibility of withdrawal on the fastening base (1) and it can be screwed into two different threaded holes (9) and (10) which are obtained on the surface of the same circular seat (3); said hole (9) is directed for the constrained reception orientation of the antenna and said hole (10) is directed for the constrained orientation of the rod which is inclined towards the roof of the vehicle on which the antenna is installed.

2. The joint for roof antenna with anti-withdrawal device of the rod according to claim 1, **characterized by** the fact that said snap ring (15) comprises a longitudinal notch (16) and a lower conical raiser (17) and it is placed around a tang hold (14) made over said lower threaded end (13) of the base (11) of the rod (12).

3. The joint for roof antenna with anti-withdrawal device of the rod according to claims 1 and 2, **characterized by** the fact that the snap ring (15) engages against the counterboring (7') which is obtained in the diametral central space (6) of said cylindrical drum (5) through the first screwing of said lower threaded end (13) into the first threaded hole (9) which is directed for the constrained reception orientation of the antenna; in said screwing, the snap ring (15) is pushed from the base (11) against the conical raiser (8) of said diametral central space (6) and it is forced to tighten until it passes through the narrowed access hole (7) to open again under the counterboring (7') with stay inside the space (6) without return.

4. The joint for roof antenna with anti-withdrawal device of the rod according to claims 1, 2 and 3, **characterized by** the fact that the narrowing/widening of the ring (15) is function of the longitudinal notch (16), of the lower conical raiser (17) and of the inherent elasticity of the material used for its manufacturing.

5. The joint for roof antenna with anti-withdrawal device of the rod according to claims from 1 to 4, **characterized by** the fact that the snap ring (15) engaged with the counterboring (7') takes a position that allows the sliding of the tang hold (14) and constitutes a counterboring against which the thread (13) engages without possibility of withdrawal and extraction of the rod (12) from the base (1) even though it is unscrewed from the threaded hole (9).

6. The joint for roof antenna with anti-withdrawal device of the rod according to claims 1 to 5, **characterized by** the fact that the threaded end (13) which is screwed to the threaded hole (9) of the base (1) can be unscrewed from the same hole and it is completely retractable inside the diametral central space (6) which is not occupied by the snap ring (15).

7. The joint for roof antenna with anti-withdrawal device of the rod according to claims from 1 to 6, **characterized by** the fact that when the threaded end (13) is unscrewed from the threaded hole (9) of the base (1) and completely retracted inside the diametral central space (6), the rod (12) rotates along the circular seat (3) and the cylindrical drum (5) rotates together with it on side circular saddles (4).

8. A joint for roof antenna with anti-withdrawal device of the rod according to claims from 1 to 7, **characterized by** the fact that, with the rotation along the circular seat (3), the lower threaded end (13) can be aligned and steadily screwed to the second threaded hole (10) and the rod takes the second fixed inclined position towards the roofs of the vehicles.

9. The joint for roof antenna with anti-withdrawal device of the rod according to claims from 1 to 7, **characterized by** the fact that, with the rotation in one direction or in the opposite one along the circular seat (3) the lower threaded end (13) can be aligned and steadily screwed both to the first threaded hole (9) and to the second threaded hole (10) obtained on the surface of the same circular seat (3) and the rod takes the correspondent first fixed orientation position for the reception of the antenna, or the correspondent second fixed inclined position towards the roof of the vehicles.

10. The joint for roof antenna with anti-withdrawal device of the rod according to claims from 1 to 7, **characterized by** the fact that the support (2) comprises a side slit (18) for the passage and the inclined positioning of the base (11) equipped with opposite side notches (19) whose distance among them is lower than the diameter of the same base; said support (2) and said relevant notches (19) are made of elastic plastic material.

## Patentansprüche

1. Anschluss für eine Dachantenne mit Antirückzugseinrichtung des Stabs, **gekennzeichnet durch** die Tatsache, dass sie gebildet wird **durch** einen Einschnappring (15), welcher gegen eine Einsenkung (7) eingreift, welche in dem diametralen zentralen Raum (6) einer zylindrischen Trommel (5) gefertigt ist, die in einem kreisförmigen Sitz (3) auf der Befestigungsbasis (1) des gleichen Anschlusses platziert ist, selbst eine Einsenkung bildet, gegen welche das mit Gewinde versehene untere Ende (13) der Basis (11) des Stabs (12) einer Antenne ohne Möglichkeit des Zurückziehens eingreift, und **durch** den gleichen diametralen zentralen Sitz (6) hindurch verläuft; dieses mit Gewinde versehene Ende (13), welches ohne Möglichkeit des Zurückziehens auf der Befestigungsbasis (1) im Eingriff steht und dass es in zwei unterschiedliche mit Gewinde versehene Löcher (9) und (10) geschraubt werden kann, welche auf der Oberfläche des gleichen kreisförmigen Sitzes (3) gefertigt sind; wobei das Loch (9) für die eingeschränkte Rezeptionsorientierung der Antenne gerichtet ist und das Loch (10) für die eingeschränkte Orientierung des Stabes gerichtet ist, welcher zu dem Dach des Fahrzeugs geneigt ist, auf welchem die Antenne angebracht ist.

2. Anschluss für Dachantenne mit Antirückzugseinrichtung des Stabes gemäß Anspruch 1, **gekennzeichnet durch** die Tatsache, dass der Einschnappring (15) eine längsgerichtete Kerbe (16) und einen unteren konischen Anheber (17) umfasst, der um ein Zangenende(14) herum platziert ist, welcher über dem unteren mit Gewinde versehenen Ende (13) der Basis (11) des Stabes (12) hergestellt ist.

3. Anschluss für eine Dachantenne mit Antirückzugseinrichtung des Stabes gemäß Ansprüchen 1 und 2, **gekennzeichnet durch** die Tatsache, dass der Einschnappring (15) gegen die Einsenkung (7') eingreift, welche in dem diametralen zentralen Raum (6) der zylindrischen Trommel (5) gefertigt ist, über das erste Schrauben des unteren mit Gewinde versehenen Endes (13) in das erste mit Gewinde versehene Loch (9) eingreift, welches für die eingeschränkte Rezeptionsorientierung der Antenne gerichtet ist; wobei bei den Schrauben der Einschnappring (15) von der Basis (11) gegen den konischen Anheber (8) des diametralen zentralen Raumes (6) geschoben wird und zwangsweise angezogen wird, bis der **durch** die verengte Zugriffsöffnung (7) hindurchtritt, um unter der Senkung (7') mit Verbleiben innerhalb des Raums (6) ohne Rückkehr wieder zu öffnen.

4. Anschluss für Dachantenne mit Antirückzugseinrichtung des Stabs gemäß Ansprüchen 1, 2 und 3, **gekennzeichnet durch** die Tatsache, dass das Verengen/Erweitern des Ringes (15) eine Funktion der längsgerichteten Kerbe (16) des unteren konischen Anhebers (17) und der inhärenten Elastizität des für ihre Herstellung verwendeten Materials ist.

5. Anschluss für Dachantenne mit Antirückzugseinrichtung des Stabes gemäß Ansprüchen von 1 bis 4, **gekennzeichnet durch** die Tatsache, dass der Einschnappring (15), der mit der Einsenkung (7') im Eingriff steht, eine Position einnimmt, welche das Gleiten des Zangenendes (14) ermöglicht und eine Einsenkung bildet, gegen welche das Gewinde (13) ohne Möglichkeit des Rückzugs und der Extraktion des Stabes (12) aus der Basis (1), selbst wenn er aus dem mit Gewinde versehenen Loch (9) geschraubt wird, eingreift.

6. Anschluss für Dachantenne mit Antirückzugseinrichtung des Stabes gemäß Ansprüchen 1 bis 5, **gekennzeichnet durch** die Tatsache, dass das mit Gewinde versehene Ende (13), welches in das mit Gewinde versehene Loch (9) der Basis (1) geschraubt ist, aus dem gleichen Loch herausgeschraubt werden kann und vollständig in den diametralen zentralen Raum (6) zurückziehbar ist, welcher nicht **durch** den Einschnappring (15) belegt wird.

7. Anschluss für Dachantenne mit Antirückzugseinrichtung des Stabes gemäß Ansprüchen von 1 bis 6, **gekennzeichnet durch** die Tatsache, dass wenn das mit Gewinde versehene Ende (13) aus dem mit Gewinde versehenen Loch (9) der Basis (1) geschraubt wird und vollständig in dem inneren diametralen zentralen Raum (6) zurückgezogen wird, der Stab (12) entlang des kreisförmigen Sitzes (3) rotiert und die zylindrische Trommel (5) zusammen mit diesem auf den kreisförmigen seitlichen Sätteln (4) rotiert.

8. Anschluss für Dachantenne mit Antirückzugseinrichtung des Stabes gemäß Ansprüchen von 1 bis 7, **gekennzeichnet durch** die Tatsache, dass mit der Rotation entlang des kreisförmigen Sitzes (3) das untere mit Gewinde versehene Ende (13) mit dem zweiten mit Gewinde versehene Loch (10) ausgerichtet und stetig in dieses geschraubt werden kann und der Stab die zweite fixierte geneigte Position zu den Dächern der Fahrzeuge einnimmt.

9. Anschluss für Dachantenne mit Antirückzugseinrichtung des Stabes gemäß Ansprüchen von 1 bis 7, **gekennzeichnet durch** die Tatsache, dass mit der Rotation in einer Richtung oder in der entgegengesetzten entlang des kreisförmigen Sitzes (3), das untere mit Gewinde versehene Ende (13) sowohl mit dem ersten mit Gewinde versehenen Loch (9) als auch dem zweiten mit Gewinde versehenen Loch (10), welche auf der Oberfläche des gleichen kreisförmigen Sitzes (3) gefertigt sind, ausgerichtet und stetig mit diesen verschraubt werden kann und der Stab die entsprechende erste fixierte Orientierungsposition für die Rezeption der Antenne einnimmt, oder die entsprechende zweite fixierte geneigte Position zu dem Dach der Fahrzeuge einnimmt.

10. Anschluss für Dachantenne mit Antirückzugseinrichtung des Stabes gemäß Ansprüchen von 1 bis 7, **gekennzeichnet durch** die Tatsache, dass der Träger (2) einen Seitenschlitz (18) für den Durchtritt und die geneigte Positionierung der Basis (11), die mit gegenüberliegenden seitlichen Kerben (19) versehen ist, deren Abstand untereinander niedriger als der Durchmesser der gleichen Basis ist, umfasst; wobei der Träger (2) und die relevanten Kerben (19) aus elastischem Kunststoffmaterial hergestellt sind.

## Revendications

1. Fixation d'antenne de toit à dispositif anti-retrait de tige, **caractérisée en ce qu'**elle est constituée par un jonc (15) à ergots qui vient en prise contre un contre-alésage (7) ménagé dans l'espace central diamétral (6) d'un tambour cylindrique (5) placé dans un siège circulaire (3) sur la base d'attache (1) de ladite fixation, constitue lui-même un contre-alésage contre lequel l'extrémité inférieure filetée (13) de la base (11) de la tige (12) d'une antenne vient en prise sans possibilité de retrait et traverse ledit siège central diamétral (6); cette extrémité filetée (13) qui est en prise sans possibilité de retrait sur la base d'attache (1) peut être vissée dans deux orifices différents (9) et (10) qui sont ménagés sur la surface dudit siège circulaire (3); et ledit orifice (9) est dirigé pour une orientation de réception forcée de l'antenne, et ledit orifice (10) est dirigé pour l'orientation forcée de la tige qui est inclinée par rapport au toit du véhicule sur lequel l'antenne est installée.

2. Fixation d'antenne de toit à dispositif anti-retrait de tige selon la revendication 1, **caractérisée en ce que** ledit jonc (15) à ergots comprend une encoche longitudinale (16) et un biseau conique inférieur (17), et est placé autour d'un support (14) de pointe formé au dessus de ladite extrémité filetée inférieure (13) de la base (11) de la tige (12).

3. Fixation d'antenne de toit à dispositif anti-retrait de tige selon la revendication 1 ou 2, **caractérisée en ce que** le jonc (15) à ergots vient en prise contre le contre-alésage (7') qui est ménagé dans l'espace central diamétral (6) dudit tambour cylindrique (5) par l'effet du premier vissage de l'extrémité filetée inférieure (13) dans le premier orifice fileté (9) qui est dirigé pour l'orientation de réception forcée de l'antenne; et le jonc (15) à ergots est poussé, lors dudit vissage, à partir de la base (11) contre le biseau conique (8) dudit espace central diamétral (6) et est poussé à force pour le serrer jusqu'à ce qu'il traverse l'orifice d'accès rétréci (7) pour s'ouvrir de nouveau contre le contre-alésage (7') en restant à l'intérieur de l'espace (6) sans revenir.

4. Fixation d'antenne de toit à dispositif anti-retrait de tige selon l'une des revendications 1, 2 ou 3, **caractérisée en ce que** le rétrécissement / l'élargissement du jonc (15) est fonction de l'encoche longitudinale (16), du biseau conique (17) et de l'élasticité inhérente de la matière utilisée pour sa fabrication.

5. Fixation d'antenne de toit à dispositif anti-retrait de tige selon l'une quelconque des revendications précédentes, **caractérisée en ce que** le jonc (15) à ergots en prise avec le contre-alésage (7') prend une position qui permet le coulissement du support (14) de pointe et constitue un contre-alésage contre lequel le filet (13) vient en prise sans possibilité de retrait et d'extraction de la tige (12) à partir de la base (1), même si ce filet est dévissé de l'orifice fileté (9).

6. Fixation d'antenne de toit à dispositif anti-retrait de tige selon l'une quelconque des revendications précédentes, **caractérisée en ce que** l'extrémité filetée (13) qui est vissée dans l'orifice fileté (9) de la base (1) peut être dévissée hors dudit orifice et est complètement rétractable à l'intérieur de l'espace central diamétral (6) qui n'est pas occupé par le jonc (15) à ergots.

7. Fixation d'antenne de toit à dispositif anti-retrait de tige selon l'une quelconque des revendications précédentes, **caractérisée en ce que** la tige (12) tourne le long du siège circulaire (3) et le tambour cylindrique (5) tourne avec elle sur des selles circulaires latérales (4), lorsque l'extrémité filetée (13) est dévissée de l'orifice fileté (9) de la base (1) et est complètement rétractée à l'intérieur de l'espace central diamétral (6).

8. Fixation d'antenne de toit à dispositif anti-retrait de tige selon l'une quelconque des revendications précédentes, **caractérisée en ce que** l'extrémité filetée inférieure (13) peut, lors de la rotation le long du siège circulaire (3), être alignée et vissée de façon stable sur le deuxième orifice fileté (10), et la tige prend la deuxième position inclinée fixe par rapport au toit du véhicule.

9. Fixation d'antenne de toit à dispositif anti-retrait de tige selon l'une quelconque des revendications 1 à 7, **caractérisée en ce que** l'extrémité filetée inférieure (13) peut, lors de la rotation dans l'une des directions ou la direction opposée le long du siège circulaire (3), être alignée et vissée de façon stable tant sur le premier orifice fileté (9) que sur le deuxième orifice fileté (10) ménagé sur la surface dudit siège circulaire (3), et la tige prend la première position d'orientation fixe pour la réception de l'antenne, ou la deuxième position inclinée fixe correspondante par rapport au toit du véhicule.

10. Fixation d'antenne de toit à dispositif anti-retrait de tige selon l'une quelconque des revendications 1 à 7, **caractérisée en ce que** le support (2) comprend une fente latérale (18) pour le passage et le positionnement incliné de la base (11) où sont ménagées des encoches latérales correspondantes (19), dont la distance mutuelle est inférieure au diamètre de ladite base; et ledit support (2) et lesdites encoches correspondantes (19) sont en matière plastique élastique.
